Europäisches Patentamt

European Patent Office

Office européen des brevets

(19)

(11) Publication number: **0 178 694 B1**

# EUROPEAN PATENT SPECIFICATION

(12)

(45) Date of publication of patent specification: **25.09.91**  (51) Int. Cl.⁵: **G01D 5/26**

(21) Application number: **85201255.8**

(22) Date of filing: **30.07.85**

(54) Rotary transducer with elastic hub for direct coupling to a rotary shaft.

(30) Priority: **04.10.84 IT 6798584**

(43) Date of publication of application:
**23.04.86 Bulletin 86/17**

(45) Publication of the grant of the patent:
**25.09.91 Bulletin 91/39**

(84) Designated Contracting States:
**DE FR GB SE**

(56) References cited:
**EP-A- 0 171 546**
**DE-U- 8 422 363**
**GB-A- 2 084 416**
**US-A- 4 318 010**

**PATENT ABSTRACTS OF JAPAN, vol. 9, no.
265 (P-399)[1988], 23rd October 1985; & JP-
A-60 113 109 (MATSUSHITA DENKO K.K.)
19-06-1985**

**PATENT ABSTRACTS OF JAPAN, vol. 9, no.
97 (P-352)[1820], 26th April 1985; & JP-A-59
222 702 (NISSAN JIDOSHA K.K.) 14-12-1984**

(73) Proprietor: **ELCIS s.a.s. di Battaglino - Piccoli
e C.
Corso Agnelli, 60
I-10137 Turin(IT)**

(72) Inventor: **Battaglino, Riccardo
Corso Agnelli, 60
I-10137 Turin(IT)**

(74) Representative: **Robba, Eugenio
Studio "INTERPATENT" via Caboto 35
I-10129 Turin(IT)**

Rank Xerox (UK) Business Services

## Description

The present invention relates to an incremental or absolute rotary transducer (encoder) with an elastic hub for direct coupling to a rotary shaft, particularly the rotary shaft of an electric motor of an operating machine.

In mounting these devices or motors some problems are encountered which are attributable to the need to compensate the misalignments that may occur between the shaft of the transducer and the shaft of the motor on which it is mounted. Further, it is also necessary to compensate the axial excursion of the shaft of the motor.

In a known type of incremental or absolute rotary transducer, the mounting is effected by means of an appropriate elastic coupling interposed between the transducer and the motor, which permits to obtain a coupling having a certain degree of freedom of both axial and radial misalignment. However, this results in an increase of overall dimensions as a support for fixing to the motor is required. Further, in spite of the use of the elastic coupling, the two shafts of the rotors must be aligned with close tolerances.

In a further known construction, the incremental rotary transducer is delivered in kit form, i.e. with separate component parts which are assembled directly on the shaft of the motor. However, this solution is not completely satisfactory, either, because there are problems of precision of alignment and mounting so that the shaft of the motor, which, as said before, is subject to axial shifting during operation, may cause the glass disc mounted thereon to scrape on the reading fork and damage it.

Another type of transducer, which forms the subject matter of Italian Utility Model Application No. 53,431-B/82 of the same Applicant, and which significantly reduces the above-mentioned drawbacks by means of a hub having a star-shaped recess coupled to a special pinion secured to the shaft of the motor, has, however, the disadvantage that it cannot be mounted on motors of small and very small dimensions because of relatively large overall dimensions due to the inevitable adoption of bearings of considerable size. Further, the hub with the star-shaped recess and the special pinion involve a relatively high machining cost.

In the US-A-4 318 010 an apparatus is disclosed for generating electrical pulses in response to rotation of a shaft. The apparatus incorporates an internal optical disc carried by a hub assembly. Since the central opening of the optical disc fits tightly the shaft, the disc is in direct contact with the shaft, and the disc-shaft assembly is a rigid structure which does not permit to compensate possible misalignments between disc and shaft.

It is therefore the object of the present invention to eliminate or reduce the drawbacks of the above-mentioned known constructions by providing an incremental or absolute rotary transducer which permits direct mounting on the motor and simultaneously ensures the compensation of both radial and axial misalignments, all by a simple and sturdy construction of extremely reduced overall dimensions so that it can be mounted also on micromotors, is of relatively low cost and further, if necessary, permits the shaft of the motor to be a through shaft.

The above and other objects and advantages of the invention, which will become apparent from the following description, are achieved by an incremental or absolute rotary transducer comprising a cylindrical body containing an encoder disc located between optoelectronical means for the formation of pulses, said encoder disc being supported by a hub for mounting on a rotary shaft the rotation of which produces said pulses, characterized in that said hub is an elastic joint connecting said rotary shaft and said encoder disc without contact of the encoder disc with the rotary shaft.

Some preferred embodiments of the invention will now be described by way of an illustrative and not limitative example with reference to the accompanying drawings, in which:

Fig. 1 is an exploded view, partly in section, of a first embodiment of the transducer according to the invention;

Fig. 2 is an elevational view, on a reduced scale, of the transducer according to the invention;

Fig. 3 illustrates a feature of mounting a detail of the transducer of Fig. 1;

Figs. 4, 5, 6 and 8 illustrate, partly in section, four different embodiments of a detail of the transducer according to the invention;

Fig. 7 is a top plan view relating to an element of the detail of Fig. 6;

Fig. 9 is an exploded view, partly in section, of another embodiment of the transducer according to the invention, and

Fig. 10 is an elevational view, partly in section, of a further embodiment of the transducer according to the invention.

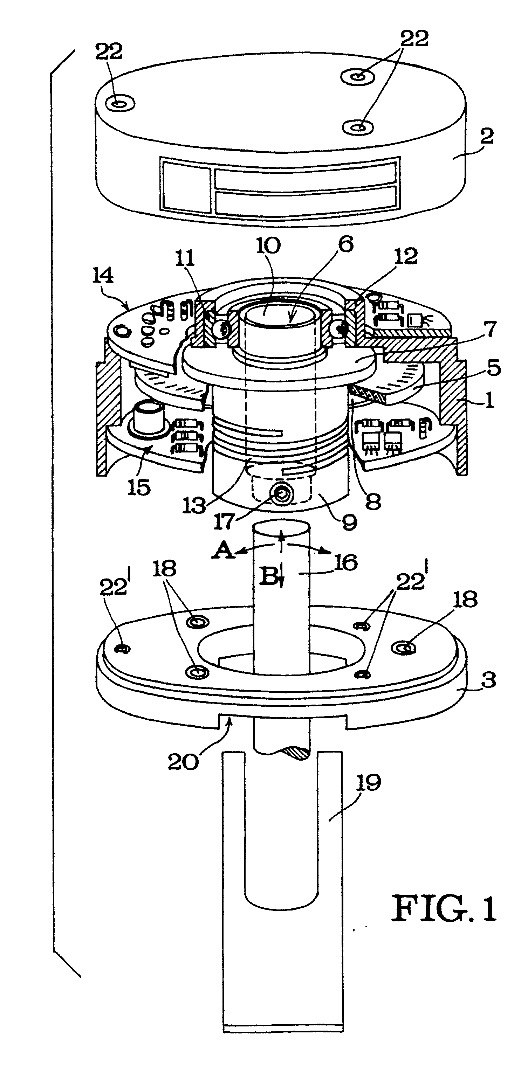

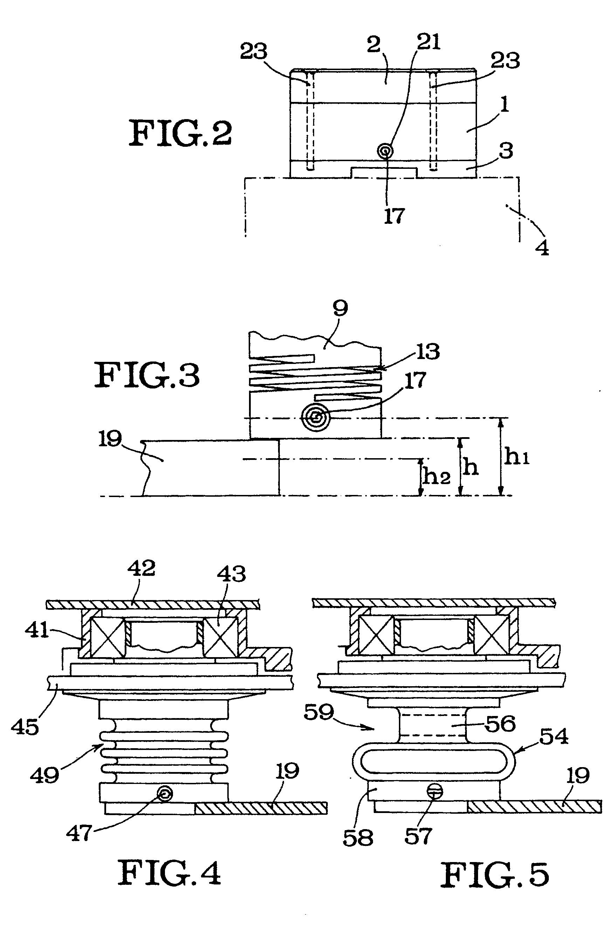

Referring to Figs. 1 and 2, the rotary transducer according to the invention is constituted by a cylindrical body 1 provided with a cover 2 and a base 3 for securing to an electric motor 4 shown only partially in Fig. 2 in dash-and-dot lines. Mounted in the body 1 is a rotor carrying an encoder disc 5 of glass, as is known in the art. The rotor, in which a through hole 6 is provided, is constituted by a rigid upper disc 7 and an elastic ring 8 between which the encoder disc 5 is secured, and by a hub 9 and an upper collar 10 between which and the collar 12 of the cylindrical body 1 a bearing 11 serving as thrust bearing is mounted.

A spiral slot 13 is made in the hub 9 to impart a certain degree of resilience thereto, as will be explained in greater detail hereinafter.

The cylindrical body 1 further comprises two printed circuits 14 and 15 arranged above and below the encoder disc, respectively, and provided with optoelectronical means such as phototransistors, light emitting diodes (LED's) or a lamp and an associated electronical portion for the formation of pulses relating to the rotation of the encoder disc 5, as is known in the art.

The main feature of the invention consists in a relatively high degree of resilience of the hub 9.

By virtue of this feature it permits to fulfil the function of a direct coupling joint with the rotary shaft 16 of a motor as its resilience permits to compensate both potential misaligments in the direction of the arrow A and axial excursions in the direction of the arrow B of the rotary shaft. The connection between the hub 9 and the shaft 16 is made by inserting the latter into the hub and tightening the fixing grub screw 17. By virtue of the provision of the hole 6, whose diameter up to the level of the grub screw 17 is greater than that of the drive shaft, the transducer according to the invention permits the drive shaft 16 to be a through shaft, if necessary.

Mounting of the described transducer on the motor is effected by first securing the base plate 3 to the motor by screws inserted into holes 18 equidistantly arranged from the rotary shaft 16. Then a fork 19 having the function of a thickness gauge is inserted into the diametrical groove 20 of the base plate 3, then the cylindrical body 1 is mounted on the base 3 by inserting the hub 9 on the rotary shaft until it abuts the fork 19 as shown in Fig. 3. The through hole 21 in the body 1 (Fig. 2) is aligned with the fixing grub screw 17 of the hub 19, a spanner or a screw driver is inserted into said hole, and the hub 9 - and thus the entire rotor - is locked on the shaft 16 of the motor. After that the fork 19 is removed, the body 1 is closed by the cover 2, and inserted into the holes 22 are screws 23 (Fig. 2) which traverse the entire body 1 to be secured in corresponding holes 22' on the base 3.

As mentioned before, the hub 9 serving as an elastic coupling joint is capable of compensating misalignments and axial excursions of the rotary shaft. The fixing position determined by the fork 19 therefore defines a distance h (Fig. 3) relative to the motor, which constitutes the medium point of axial excursion of the joint whereas the distance $h_1$ corresponds to the maximum compression of the joint and the distance $h_2$ to that of maximum elongation.

Figs. 4 to 10 schematically illustrate further possible embodiments of the elastic hub for a rotary transducer according to the invention.

Fig. 4 shows a portion of the cylindrical body 41 of the transducer and the cover 42 and rotor reacting against bearings 43. The encoder disc 45 is mounted on a hub 49 in which the resilience is obtained by a structure of the bellows type secured to the drive shaft by a grub screw 47 at the distance determined by the fork 19.

Fig. 5 shows a structure which is identical to that of Fig. 4 except for the structure of the hub 59 which consists of two compressed rings 54 and 56 which are superimposed and laid crosswise, and a base 58 wherein the grub screw 57 for fixing to the rotary shaft is accommodated.

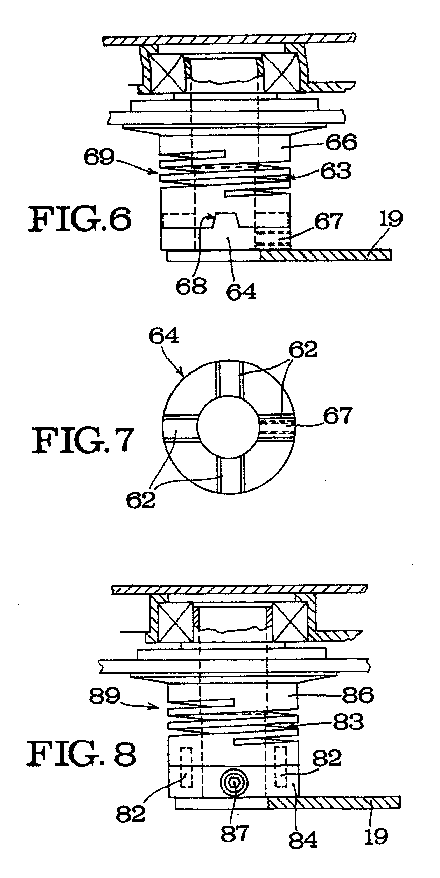

In the embodiment of Fig. 6, the hub 69 is composed of an upper portion 69, in which a spiral slot is made like that of Fig. 1, and of a lower portion 64 which accommodates the grub screws 67 for securing to the rotary shaft shown in a top plan view in Fig. 7. The two portions 64 and 66 of the hub 69 are coupled by fitting four trapezium-shaped ribs 62, extending radially on the portion 64, into corresponding grooves 68 of the portion 66.

The embodiment of Fig. 8 again relates to a hub 89 made of two portions 84 and 86, the first one provided with a fixing grub screw 87 and the second one with a spiral groove 83 to provide the desired resilience. The two portions 84 and 86 are connected by pins 82.

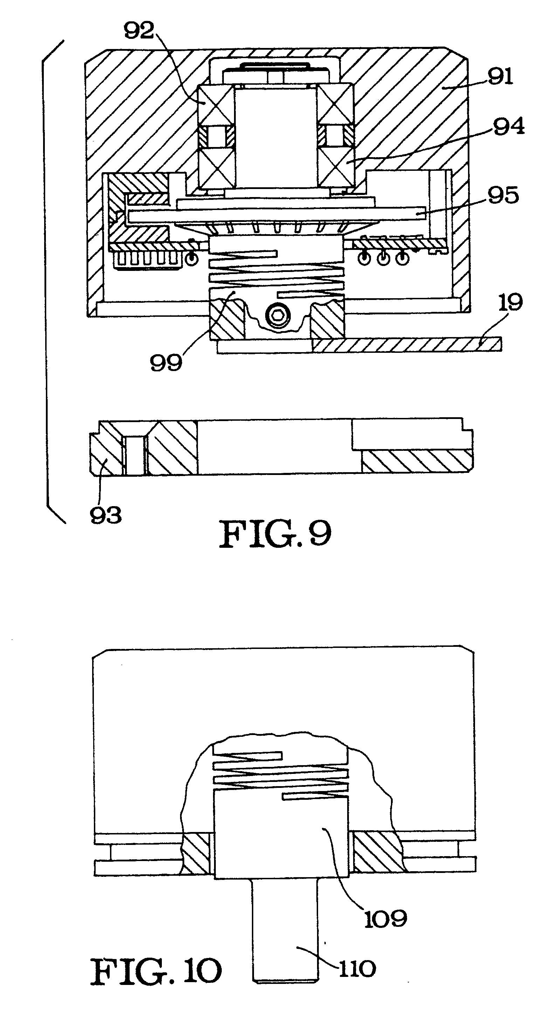

The transducer of Fig. 9 is composed of only two main portions: a cylindrical body 91 and a base 93 for securing to the motor. The elastic hub 99 is of the type illustrated in Fig. 1 with the only difference that the rotor reacts against a pair of pre-loaded bearings 92, 94 accommodated in an appropriate seat in the body 1. The encoder disc 95 is mounted on a hub 99 as in the preceding versions.

A variation of the embodiment of Fig. 9, also with two pre-loaded bearings, is illustrated in Fig. 10, in which the output shaft 110 is incorporated in the hub 109.

The embodiments of Figs. 9 and 10, although they are possible, are more expensive than the preceding ones because of the adoption of two bearings instead of only one as was advantageously provided for in the previously illustrated embodiments of the invention.

## Claims

1. Rotary transducer comprising a cylindrical body (1) containing an encoder disc (5) located between optoelectronical means (14, 15) for the formation of pulses, said encoder disc (5) being supported by a hub (9) for mounting on a rotary shaft (16) of a motor of an operating machine the rotation of which produces said pulses, characterized in that said hub (9) is a single piece including an elastic portion (13) for providing a direct elastic coupling joint connecting said rotary shaft (16) and said encoder disc (5) without contact of the encoder disc with the rotary shaft (16), said hub (9) being provided with an axial through hole (6) in which said shaft (16) is received and with locking means (11, 12) to prevent the axial movement of the hub, extending from said cylindrical body (1) of the transducer.

2. A rotary transducer according to claim 1, characterized in that said locking means (11, 12) of the axial movement of the hub is a bearing (11) abutting against a collar (12) of said cylindrical body (1), mounted on said hub (9) on the opposite side of said elastic portion (13) with respect to said encoder disc (5).

3. A rotary transducer according to claim 1, characterized in that said hub (9) is formed of an upper rigid portion for securing said encoder disc (5), an elastic intermediate portion and a rigid lower portion provided with a hole for insertion of a grub screw (17, 47, 87) for securing said rotary shaft (16) to be coupled to the hub (9).

4. A rotary transducer according to claims 1 and 3, characterized in that said elastic intermediate portion of said hub (9) is provided with a spiral slot (13).

5. A rotary transducer according to claims 1 and 3, characterized in that said elastic intermediate portion of said hub (9) has a bellows structure (49).

6. A rotary transducer according to claims 1 and 3, characterized in that said elastic intermediate portion of said hub (9) is formed of superimposed and deformable rings (54, 56) having a horizontal axis.

**Revendications**

1. Transducteur rotatif comportant un corps cylindrique (1) contenant un disque codeur (5) disposé entre des moyens opto-électroniques (14,15) pour la formation d'impulsions, ledit disque codeur (5) étant supporté par un moyeu (9) pour un montage sur un arbre rotatif (16) d'un moteur d'une machine en fonctionnement dont la rotation produit lesdites impulsions, caractérisé en ce que ledit moyeu (9) est constitué d'un unique élément comprenant une partie élastique (13) pour constituer un raccord de couplage élastique direct reliant ledit arbre rotatif (16) et ledit disque codeur (5) sans contact du disque codeur avec l'arbre rotatif (16), ledit moyeu (9) étant pourvu d'un trou traversant axial (6) dans lequel est reçu ledit arbre (16) et de moyens de blocage (11,12) afin d'empêcher le mouvement axial du moyeu, s'étendant depuis ledit corps cylindrique (1) du transducteur.

2. Transducteur rotatif selon la revendication 1, caractérisé en ce que lesdits moyens de blocage (11,12) du mouvement axial du moyeu sont un palier (11) butant contre un collier (12) dudit corps cylindrique (1), monté sur ledit moyeu (9) sur le côté opposé de ladite partie élastique (13) par rapport audit disque codeur (5).

3. Transducteur rotatif selon la revendication 1, caractérisé en ce que ledit moyeu (9) est constitué d'une partie rigide supérieure afin de fixer ledit disque codeur (5), d'une partie intermédiaire élastique et d'une partie inférieure rigide pourvue d'un trou pour l'introduction d'une vis sans tête (17,47,87) pour fixer ledit arbre rotatif (16) devant être couplé au moyeu (9).

4. Transducteur rotatif selon les revendications 1 et 3, caractérisé en ce que ladite partie intermédiaire élastique dudit moyeu (9) est munie d'une fente hélicoïdale (13).

5. Transducteur rotatif selon les revendications 1 et 3, caractérisé en ce que ladite partie intermédiaire élastique dudit moyeu (9) possède une structure à soufflet (49).

6. Transducteur rotatif selon les revendications 1 et 3, caractérisé en ce que ladite partie intermédiaire élastique dudit moyeu (9) est formée d'anneaux superposés et déformables (54,56) possédant un axe horizontal.

**Patentansprüche**

1. Drehgeber mit einem zylindrischen Körper (1), der zwischen optoelektronischen Hilfsmitteln (14, 15) zur Impulserzeugung eine Codierscheibe (5) enthält, welche zum Zweck der Anbringung auf einer drehbaren Welle eines Motors einer Arbeitsmaschine von einer Nabe (9) getragen wird, deren Rotation die Impulse erzeugt, **dadurch gekennzeichnet**, dass die Nabe (9) einstückig ausgebildet ist und zur Bildung einer direkten elastischen Kupplungverbindung einen elastischen Bereich (13) hat, wodurch die drehbare Welle (16) und die Codierscheibe (5) miteinander verbunden werden, ohne dass die Codierscheibe (5) die drehbare Welle (16) berührt, wobei die Nabe (9) mit einem axial durchgehenden Loch (6), welches die drehbare Welle (16) aufnimmt, und mit von dem zylindrischen Körper (1) des Drehgebers abstehenden Vorriegelungselementen (11, 12) versehen ist, um eine axiale Bewegung der Nabe zu verhindern.

2. Drehgeber nach Anspruch 1,
   **dadurch gekennzeichnet**, dass die Verriegelungselemente (11, 12) zur Begrenzung der axialen Bewegung der Nabe durch ein Lager und einen Kragen (12) des zylindrischen Körpers (1), an den das Lager (11) stößt, gebildet worden, und dass das Lager (11) auf der Nabe (9) auf der dem elastischen Bereich (13) abgewandten Seite der Codierscheibe (5) befestigt ist.

3. Drehgeber nach Anspruch 1,
   **dadurch gekennzeichnet**, dass die Nabe (9) aus einem oberen starren Abschnitt zur Festlegung der Codierscheibe (5), einem elastischen Zwischenabschnitt und einem starren unteren Abschnitt gebildet ist, welcher mit einem Loch für das Einsetzen eines Gewindestiftes (17, 47, 87) zur Festlegung der drehbaren Welle (16), welche mit der Nabe (9) verbunden wird, versehen ist.

4. Drehgeber nach den Ansprüchen 1 und 3,
   **dadurch gekennzeichnet**, dass der elastische Zwischenabschnitt der Nabe (9) mit einem wendelförmigen Schlitz (13) versehen ist.

5. Drehgeber nach den Ansprüchen 1 und 3,
   **dadurch gekennzeichnet**, dass der elastische Zwischenabschnitt der Nabe (9) einen Aufbau entsprechend einem Faltenbalg (49) hat.

6. Drehgeber nach den Ansprüchen 1 und 3,
   **dadurch gekennzeichnet**, dass der elastische Zwischenabschnitt der Nabe (9) aus übereinander angeordneten und verformbaren Ringen (54, 56) mit horizontalen Achsen gebildet ist.

FIG.1

## FIG.2

## FIG.3

## FIG.4

## FIG.5

**FIG.6**

69
66
63
67
19
68
64

**FIG.7**

64
62
67
62

**FIG. 8**

89
86
83
82
82
87
84
19

FIG.9

FIG.10